# EUROPÄISCHE PATENTSCHRIFT

(11) **EP 3 424 058 B1**
(45) Veröffentlichungstag und Bekanntmachung des Hinweises auf die Patenterteilung: **23.10.2019**
(21) Anmeldenummer: 17703319.8
(22) Anmeldetag: 02.02.2017
(51) Int. Cl.: H01F 7/16, H01F 7/18

(54) **BISTABILE MAGNETVENTIL-EINRICHTUNG UND VERFAHREN ZUM ERMITTELN EINER ANKERSTELLUNG EINES BISTABILEN MAGNETVENTILS**
BISTABLE SOLENOID VALVE DEVICE AND METHOD FOR DETERMINING AN ARMATURE POSITION OF A BISTABLE SOLENOID VALVE
MOYEN FORMANT VANNE MAGNÉTIQUE BISTABLE ET PROCÉDÉ DE DÉTERMINATION DE LA POSITION DE L'INDUIT D'UNE VANNE MAGNÉTIQUE BISTABLE

(30) Priorität: 05.03.2016 DE 102016002677
(43) Veröffentlichungstag der Anmeldung: 09.01.2019
(73) Patentinhaber: WABCO Europe BVBA, 1170 Brussels (BE)
(72) Erfinder: GOERS, Andreas, 30982 Pattensen (DE); STRUWE, Otmar, 30519 Hannover (DE); TEICHMANN, Andreas, 30916 Isernhagen (DE)
(74) Vertreter: Koschnitzki, Thomas
(86) Internationale Anmeldenummer: PCT/EP2017/000135
(87) Internationale Veröffentlichungsnummer: WO 2017/153030

(56) Entgegenhaltungen:
- DE-A1-102005 041 873
- DE-A1-102007 016 787
- DE-A1-102011 081 921

## Beschreibung

Die Erfindung betrifft eine bistabile Magnetventil-Einrichtung für ein Fluidsystem, insbesondere in einem Nutzfahrzeug, sowie ein Verfahren zum Ermitteln einer Ankerstellung eines bistabilen Magnetventils.

Bistabile Magnetventile ermöglichen in einem Fluidsystem, zum Beispiel einem Druckluftsystem, die Verstellung zwischen zwei Ventil-Stellungen, wobei beide Ventil-Stellungen im stromlosen Zustand des Magnetventils gehalten werden können. Das bistabile Magnetventil weist im Allgemeinen eine Permanentmagnet-Einrichtung und einen relativ zur Permanentmagnet-Einrichtung verstellbaren Anker auf, der bestrombare Ankerspulen aufweist. Je nach Bestromung einer ersten Ankerspule oder zweiten Ankerspule kann der Anker in seine erste Ankerstellung oder zweite Ankerstellung verstellt werden, in denen er auch nach Abstellen des Schaltstroms, d. h. im unbestromten Zustand, sicher gehalten wird.

Elektropneumatische Handbremsen mit einer bistabilen Magnetventil-Einrichtung ermöglichen eine pneumatische Betätigung der Handbremse, wobei im abgestellten Zustand bzw. Fahrt-Zustand keine Bestromung und somit kein Energieverbrauch erforderlich ist. Weiterhin ist auch während der Fahrt, d. h. bei ausgeschalteter Parkbremse, kein Strom und somit kein Energieverbrauch erforderlich.

Die DE 37 30 381 A1 zeigt ein derartiges bistabiles Magnetventil, das in seinen beiden Stellungen eine Dauermagnet-Haltekraft ermöglicht. Hierbei ist ein Anker axial zwischen seinen Ankerstellungen verstellbar vorgesehen und stößt in seinen Ankerstellungen an einen ersten End-Kern oder zweiten End-Kern, wobei zu dem anderen End-Kern jeweils ein Luftspalt ausgebildet wird. Der Luftspalt bewirkt, dass das durch den jeweiligen End-Kern verlaufende Dauermagnet-Feld schwächer ist als das ohne Luftspalt zwischen dem anderen End-Kern und dem Anker verlaufende Dauermagnet-Feld. In seinen Ankerstellungen bzw. Ventil-Stellungen verschließt der Anker mit seinen Dichtmitteln jeweils geeignete Fluiddurchlässe.

Die DE 10 2007 016787 offenbart eine bistabile Magnetventil-Einrichtung nach dem Oberbegriff von Anspruch 1.

In einigen Situationen kann jedoch der Fall auftreten, dass die genaue Ankerstellung und somit die Ventilstellung unbekannt oder unsicher ist. So können Erschütterungen während der Fahrt grundsätzlich zu einer Verstellung beweglicher Teile, wie z. B. auch des Ankers führen. Auch kennt die Steuereinrichtung des Fluidsystems, nachdem sie z. B. bei Start des Fahrzeuges eingeschaltet wird, zunächst im Allgemeinen nicht den Zustand ihrer Einrichtungen oder nimmt zunächst an, dass die Einrichtungen und Elemente in ihrem unbestromten Grundzustand sind. Bei Einsatz eines bistabilen Magnetventils, z. B. in einer elektropneumatischen Handbremse, weiß die Brems-Steuereinrichtung somit z. B. nicht, ob das Fahrzeug mit eingelegter oder nicht eingelegter Handbremse abgestellt wurde, wobei etwaige Speichereinträge bei Starten des Fahrzeugs zunächst zu unsicher sind.

Probe-Verstellungen oder Rückstellungen des bistabilen Magnetventils in eine der beiden Positionen können im Allgemeinen den Fahrbetrieb behindern oder unnötige Verstellungen verursachen.

So wird eine Test-Überprüfung einer Parkbremse während des Park-Zustandes ggf. zu einem Lösen und einer unkontrollierten Bewegung des Fahrzeugs führen. Während der Fahrt kann eine Überprüfung des Zustandes der elektropneumatischen Parkbremse ggf. zu einer Betätigung und somit zu einer Bremsung führen, die zu gefährlichen Fahrsituationen führen können.

Der Erfindung liegt die Aufgabe zugrunde, eine sichere Überprüfung des Schaltzustandes einer bistabilen Magnetventil-Einrichtung mit relativ geringem Aufwand zu ermöglichen.

Diese Aufgabe wird durch eine bistabile Magnetventil-Einrichtung und ein Verfahren zum Ermitteln einer Ankerstellung nach den unabhängigen Ansprüchen gelöst. Die Unteransprüche beschreiben bevorzugte Weiterbildungen. So ist insbesondere eine elektropneumatische Parkbremse mit der bistabilen Magnetventil-Einrichtung vorgesehen.

Somit wird die Ventil-Stellung durch Bewertung oder Messung der Induktivitäten der beiden Ankerspulen und einen Vergleich der Induktivitäten ohne eine Verstellung des Ankers ermittelt. Hierzu weist die bistabile Magnetventil-Einrichtung eine Detektionseinrichtung auf.

Somit wird bereits der Vorteil erreicht, dass eine Sensierung der Schaltstellung durch eine Sensierung der Ankerstellung ohne Verstellung und somit ohne Eingriff in das Fluidsystem ermöglicht wird. Die Überprüfung der Ventilstellung bzw. der Ankerstellung kann somit vor Fahrtbeginn und auch z. B. routinemäßig während der Fahrt durchgeführt werden, ohne dass hierbei kritische oder gefährliche Situationen entstehen.

Gemäß einer bevorzugten Ausbildung weist die Detektionseinrichtung Messpfade auf, über die die Ankerspulen jeweils bestromt werden. Somit wird bereits der Vorteil erreicht, dass eine Bestromung der Ankerspulen unabhängig von der Leistungs-Bestromung der Ankerspulen zu ihrer Verstellung vorgesehen ist. Die Messpfade sind vorzugsweise an eine Vergleichseinrichtung angeschlossen, die Messwerte der Messpfade, z. B. Messspannungen, miteinander vergleicht.

Der Erfindung liegt hierbei der Gedanke zugrunde, dass die jeweilige Ankerstellung zu einer Beeinflussung des Permanentmagnetfeldes und der Induktivität der Ankerspule führt; so wird die effektive Induktivität der Ankerspule an der Position der Anlage des Ankers am Kern erhöht, hingegen bei Ausbildung eines Luftspaltes zwischen Anker und Kern verringert. Somit wird insbesondere die Ankerspule, die durch Bestromung eine Verstellung der Ankerstellung ermöglicht, eine niedrigere effektive Induktivität als die andere Ankerspule aufweisen.

Durch eine Messung der Induktivitäten kann somit grundsätzlich eine Aussage über die Ankerstellung bzw. die Position des Luftspaltes getroffen werden; durch einen Vergleich der Induktivitäten der beiden Ankerspulen ist eine sichere Aussage möglich.

Vorteilhafterweise ist gemäß einer Ausführungsform für die Messung der Induktivitäten eine Mess-Spannungsquelle vorgesehen, die von der zur Verstellung des Ankers vorgesehenen Versorgungs-Spannungsquelle verschieden ist. Hierdurch kann sichergestellt werden, dass für die Messung eines Bestromung ohne Verstellung des Ankers erfolgt.

Durch die Ausbildung von Messpfaden mit einer gemeinsamen Mess-Versorgungsspannung kann somit eine Messung durch Aktivierung des Messpfades, z. B. durch eine Mess-Schalteinrichtung erfolgen, die von der elektrischen Ansteuerung der Leistungsverstellung des Ankers getrennt ist. Es können somit Messspannungen als galvanische Spannungen abgegriffen und direkt miteinander verglichen werden, ohne dass die Leistungs-Schaltereinrichtungen zum Verstellen des Ankers betätigt werden.

Die Messpfade weisen vorteilhafterweise jeweils einen Messwiderstand auf, der insbesondere in einer Reihenschaltung mit der jeweiligen Ankerspule vorgesehen sein kann, so dass ein Spannungsabfall oder ein Spannungsteiler-Schaltung gebildet wird, an der eine Messspannung des jeweiligen Messpfades abgegriffen werden kann. Somit kann die Vergleichseinrichtung die Messspannungen der Messpfade vergleichen, z. B. als Komparator zum gleichzeitigen Vergleichen der Messspannungen oder auch z. B. als Mikrocontroller zum sukzessiven Vergleichen der Messspannungen. Die Messwiderstände sind vorteilhafterweise identisch, um direkt vergleichbare Messspannungen auszubilden. Die beiden Messpfade sind vorteilhafterweise über eine gemeinsame Mess-Versorgungsspannung an ihre jeweilige Ankerspule angeschlossen, so dass bei Bestromung der Messpfade jeweils vergleichbare Messungen erfolgen.

Grundsätzlich ist die bistabile Magnetventil-Einrichtung vorteilhafterweise in ihren Ankerspulen und Messpfaden symmetrisch ausgebildet, d. h. mit symmetrischer Permanentmagnet-Einrichtung und/oder symmetrischer magnetischer Ausbildung eines Ankerkerns des Ankers, und insbesondere mit identischen oder vergleichbaren Ankerspulen und Messwiderständen.

Die Messspannungen können insbesondere als an den Ankerspulen anliegende elektrische Spannungen abgegriffen und miteinander verglichen werden, insbesondere in einer Spannungsteilerschaltung jeweils zwischen dem Messwiderstand und der Ankerspule.

Die erfindungsgemäß ermöglichte Messung ist somit schnell und sicher durchführbar, und dem z. B. eine Mess-Schaltereinrichtung betätigt wird und die Messpfade aktiviert.

Indem ein Vergleich der Messungen der beiden Messpfade, d. h. eine Bestromung der ersten Ankerspule und der zweiten Ankerspule vorgenommen wird, kann direkt der Unterschied zwischen der jeweils aktiven Ankerstellung und der nichtaktiven bzw. nicht eingestellten Ankerstellung ermittelt werden. Somit führen z. B. Temperaturänderungen und andere Beeinflussungen zwar ggf. zu absoluten Änderungen der Messwerte; durch die symmetrischen Ausbildung wird das Ergebnis des Vergleichs jedoch nicht beeinflusst.

Alternativ zu der Ausbildung separater Messpfade ist auch eine weitgehende Integration der Detektionseinrichtung in die Endstufe, d. h. die Leistungs-Strompfade zur Ansteuerung der Ankerspulen möglich. So können gemäß einer Ausführungsform Shunt-Widerstände in Reihe mit den Ankerspulen und einer Leistungs-Schaltereinrichtung geschaltet und an die Versorgungs-Spannungsquelle angeschlossen werden. Ein Shunt-Widerstand kann hierbei hinreichend niederohmig, z. B. einige Ohm, gewählt werden, so dass die Leistungsströme bzw. Schaltströme hiervon nicht wesentlich beeinflusst werden und der Leistungsverlust nicht hoch ist. Die an den Shunt-Widerständen abfallenden Spannungen können direkt als Messspannungen abgegriffen werden, und die Mess-Spannungen können in einer Vergleichseinrichtung, z. B. einem Operationsverstärker oder Komparator, verglichen werden. Die Shunt-Widerstände können somit insbesondere an ohnehin vorhandenen Kontaktierungen, z. B. der Ankerspulen gegenüber Masse, vorgesehen werden.

Eine weitere Ausbildung der Erfindung sieht vor, Mess-Pfade parallel mit den Leistungs-Schaltereinrichtungen auszubilden, und diese ParallelSchaltung mit jeweils einer Ankerspule in Reihe zwischen Versorgungsspannungs-Anschlüsse zu schalten. Hierbei ist vorteilhafterweise ein derartig hoher Messwiderstand vorgesehen, dass bei Betätigung einer Mess- Schaltereinrichtung lediglich ein geringer Messstrom fließt, der - zumindest innerhalb der für die Messung erforderlichen Schalt-Zeiten - nicht zu einer Verstellung des Ankers führt. Somit kann wiederum eine gemeinsame Versorgungsspannungsquelle zur Ausbildung der Detektionseinrichtung und als Endstufe genutzt werden.

Bei derartigen Ausbildungen mit gemeinsamer Spannungsquelle, d. h. einer Verwendung der Versorgungsspannungsquelle sowohl zur Leistungs-Verstellung zwischen den Ankerstellungen als auch zur Messung ist somit nur ein geringer zusätzlicher Hardwareaufwand erforderlich.

Aber auch bei Ausbildungen mit einer zusätzlichen Mess-Spannungsquelle, die von der Versorgungs-Spannungsquelle verschieden ist, können geeignete synergistische Wirkungen erreicht werden, indem z. B. eine Spannungsquelle bzw. Versorgungsspannung der Steuereinrichtung, d. h. des in der Steuereinrichtung vorgesehenen Mikroprozessors genutzt wird. Derartige Mikroprozessoren weisen z. B. im Allgemeinen Versorgungsspannungen von 3,3 Volt und/oder 5 Volt auf, die somit ergänzend auch zur Ansteuerung eines separaten Mess-Pfades genutzt werden können, ohne dass somit eine zusätzliche Spannungsquelle erforderlich wird.

Grundsätzlich kann auch eine Leistungs-Endstufe - ohne apparative bzw. hardwaremäßige Änderungen - lediglich sehr kurzzeitig bestromt werden, so dass keine Leistungs-Verstellung zwischen den Ankerstellungen erreicht wird, und die über die Messung erreichten Messwerte, d. h. Strom bzw. Spannung in Abhängigkeit der Zeit, miteinander verglichen werden.

Die Messung kann insbesondere das sich zeitlich ändernde Verhalten der beiden Ankerspulen ermitteln bzw. berücksichtigen, das durch die Induktivität beeinflusst wird. Die Messungen können bei einem Einschaltvorgang und/oder bei einem Ausschaltvorgang, d.h. insbesondere nach Schließen oder Öffnen einer Mess-Schaltereinrichtung erfolgen. So kann zum einen eine Messung nach einer vorgegebenen Zeit nach Schließen und/oder Öffnen der Mess-Schaltereinrichtung erfolgen, wobei Messströme oder Messspannungen der Messpfade verglichen werden können. Zum anderen kann eine Messung einer Zeitdauer erfolgen, bis zu der bei dem Einschalt- oder Ausschaltvorgang eine vorgegebene Bezugsspannung erreicht wird.

Erfindungsgemäß wird insbesondere auch eine elektropneumatische Handbremse mit der bistabilen Magnetventil-Einrichtung geschaffen, die Überprüfungen mit geringem Aufwand, auch geringen Energieverbrauch, und einer sicheren Aussage, ohne Beeinflussung des Zustandes der Handbremse ermöglicht.

Die Erfindung wird im Folgenden anhand der beiliegenden Zeichnungen an einigen Ausführungsformen näher erläutert. Es zeigen:
- Fig. 1: ein Schaltbild einer bistabilen Magnetventil-Einrichtung gemäß einer Ausführungsform der Erfindung;
- Fig. 2: eine Magnetventil-Einrichtung mit Detektionseinrichtung gemäß einer weiteren Ausführungsform der Erfindung;
- Fig. 3: Messdiagramme der Spannung als Funktion der Zeit der Induktionsmessungen in verschiedenen Ankerstellungen, jeweils bei einer Zeit-Messung und Spannungs-Messung, bei Ausführungen mit plus-seitigem Mess-Widerstand;
- Fig. 4: Messdiagramme der Spannung als Funktion der Zeit der Induktionsmessungen in verschiedenen Ankerstellungen, jeweils bei einer Zeit-Messung und Spannungs-Messung , bei Ausführungen mit minus-seitigem Mess-Widerstand;
- Fig. 5: eine im Wesentlichen der Fig. 1 entsprechende Ausführungsform mit am Permanentmagnet-Joch ausgebildeten ortsfesten Kernen;
- Fig. 6: eine im Wesentlichen der Fig. 2 entsprechende Ausführungsform mit am Permanentmagnet-Joch ausgebildeten Kernen;
- Fig. 7: eine Magnetventil-Einrichtung gemäß einer weiteren Ausführungsform mit im Leistungs-Stromkreis vorgesehenen ShuntWiderständen;
- Fig. 8: eine Magnetventil-Einrichtung gemäß einer weiteren Ausführungsform mit gemeinsamer Spannungsquelle zur Leistungsversorgung und Detektion.

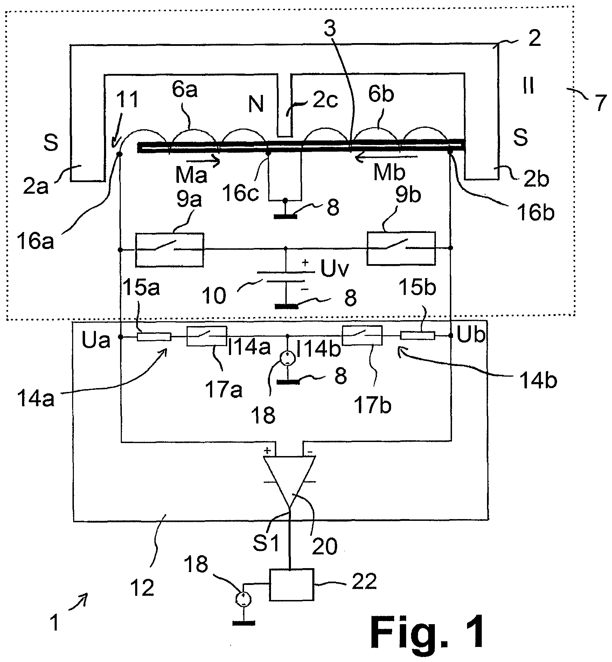

Eine in Fig. 1 gezeigte Magnetventil-Einrichtung 1 weist ein Magnetventil 7 und eine Detektionseinrichtung 12 auf. Das Magnetventil 7 weist ein Permanentmagnet-Joch 2 auf, das symmetrisch und dreipolig ausgebildet ist, mit einem mittleren Pol, hier dem Nord-Pol N an einem mittleren Kern 2a bzw. mittleren Polansatz und mit axial äußeren Polen, hier den Südpolen S, die an einem ersten Kern (Polansatz) 2a und einem zweiten bzw. rechten Kern (Polansatz) 2b ausgebildet sind. Entsprechend ist auch eine zu dieser Ausbildung inverse Magnet-Ausbildung möglich.

Ein Anker 3 aus magnetisch leitendem Eisenmaterial ist in seiner Axialrichtung (A) längsverstellbar in dem Permanentmagnet-Joch 2 vorgesehen. Eine linke (erste) Ankerspule 6a sowie eine rechte (zweite) Ankerspule 6b sind ortsfest vorgesehen und mit einem (z. B. gemeinsamen) Anschluss 16c jeweils an Masse 8 und mit ihrem weiteren Anschluss 16a bzw. 16b über jeweils einen Leistungs-Schalter 9a bzw. 9b an eine Versorgungs-Spannungsquelle 10 mit einer Versorgungsspannung +Uv angeschlossen. Somit kann durch Schließen des ersten (linken) Leistungs-Schalters 9a ein erster Anker-Stromkreis von der Versorgungsspannung Uv über den geschlossene ersten Leistungs- Schalter 9a, die erste Ankerspule 6a zur Masse 8 geschlossen werden, und entsprechend mit dem zweiten Leistungs-Schalter 9b ein zweiter Anker-Stromkreis über die die zweite Ankerspule 6b.

Die Leistungs-Schalter 9a und 9b können derartig kombiniert sein, dass nur einer von beiden jeweils geschlossen ist, z. B. als kombinierter Schalter oder Wechselschalter. Im unbestromten Zustand nimmt der Anker 3 seine jeweils zuletzt eingestellte Ankerstellung ein, die als solche stabil ist. Figur 1 zeigt die rechte Ankerstellung II, in der der Anker 3 an dem rechten (zweiten) Kern 2b anliegt, so dass zwischen dem Anker 3 und dem zweiten (rechten) Kern 2b kein Luftspalt verbleibt, hingegen zwischen dem Anker 3 und dem linken Magnetpol 2a ein Luftspalt 11 gebildet ist. Somit ist ein rechtes Permanentmagnet-Feld Mb aufgrund des fehlenden Luftspaltes zwischen dem Anker 3 und dem rechten Kern /Magnetpol 2b größer als ein linkes Permanentmagnet-Feld Ma zwischen dem linken Ken/ Magnetpol 2a und dem mittleren Kern 2c, der den Nordpol N bildet. Der Anker 3 wird somit an dem rechten Kern 2b gehalten.

Wenn von der Stellung der Figur ausgehend nachfolgend durch Schließen des linken (ersten) Schalters 9a der linke Stromkreis geschlossen wird und somit ein Schaltstrom I-schalt von der Versorgungs-Spannungsquelle 10 über den geschlossenen Leistungs- Schalter 9a und die linke (erste) Ankerspule 6a zur Masse 8 fließt, wird hierdurch die linke (erste) Ankerspule 6a bestromt, so dass das linke Permanentmagnet-Feld Ma hierdurch verstärkt wird und dementsprechend die erste Magnetkraft, die den Anker 3 zu dem linken Magnetpol 2a zieht, größer wird als die zweite Magnetkraft, die das stärkere rechte Permanentmagnet-Feld Mb enthält und den Anker 3 in der gezeigten rechten Ankerstellung hält. Somit wird der Anker 3 von der Figur 1 gezeigten rechten Ankerstellung II in die linke Ankerstellung I verstellt, wodurch der Luftspalt 11 zwischen dem linken Magnetpol 2a und dem Anker 3 geschlossen wird, und entsprechend ein Luftspalt 11 an der rechten Seite zwischen dem Anker 3 und dem rechten Magnetpol/Kern 2b entsteht, der das rechte Permanentmagnet-Feld Mb abschwächt. Auch beim nachfolgenden Öffnen des ersten Schalters 9a bleibt dann nachfolgend die linke Ankerstellung I wiederum stabil.

Zur Detektion der Ankerstellung ist eine Detektionseinrichtung 12 vorgesehen, die gemäß Figur 1 einen linken (ersten) Mess-Pfad 14a und einen zweiten (rechten) Mess-Pfad 14b sowie eine Vergleichseinrichtung 16 aufweist. Der erste Mess-Pfad 14a weist einen ersten (linken) Messwiderstand 15a und eine erste Mess-Schaltvorrichtung 17a auf, die in Reihe zwischen den ersten (linken) Spulenanschluss 16a und eine Mess-Spannungsquelle 18 geschaltet sind. Der erste Mess-Widerstand 15a ist hinreichend groß dimensioniert, das bei geschlossener erster Mess-Schaltereinrichtung 17a kein derartig großer erster Mess-Strom I14a fließt, der zu einer Verstellung des Ankers 3 ausreichend ist. Der zweite Mess-Pfad 14b ist wiederum symmetrisch zum ersten Messpfad 14a ausgebildet, d. h. mit einer Reihenschaltung des zweiten Mess-Widerstandes 15b und der zweiten Mess-Schaltereinrichtung 17b zwischen der Mess-Spannungsquelle 18 und dem zweiten (rechten) Spulenanschluss 16b. Die Messwiderstände 15a und 15b sind gleich gewählt.

Somit ist die gesamte in Figur 1 gezeigte Magnetventil-Einrichtung 1 mit dem Magnetventil 7 und der Detektionseinrichtung 12 symmetrisch ausgebildet. Die Vergleichseinrichtung 20 ist als Komparator ausgebildet, dessen Eingangsanschlüsse 20a und 20b, d. h. ein Plus-Eingang und einen Minus-Eingang, wiederum an die Spulenanschlüsse 16a und 16b angeschlossen ist, in grundsätzlich beliebiger Polung.

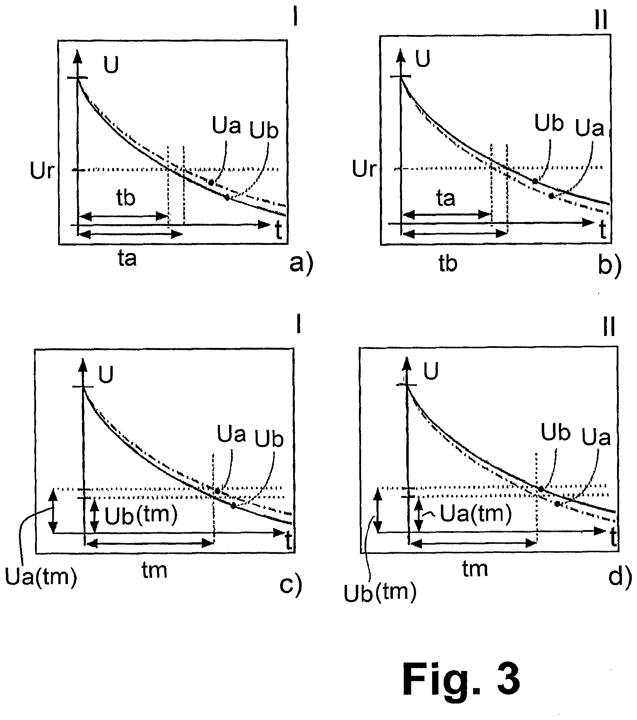

Die mit der Detektionseinrichtung 12 vorgenommenen Messvorgänge sind detaillierter in Figur 3 gezeigt. Die Figuren 3a bis 3d zeigen jeweils Messspannungen Ua bzw. Ub, die an den Spulenanschlüssen 16a, 16b während eines Messvorgangs vorliegen. So wird durch Schließen der ersten Mess-Schaltereinrichtung 17a ein erster Messstromkreis geschlossen, der von der Mess-Spannung 18 mit einer Messspannung U, z. B. auch Uv, über die geschlossene erste Mess-Schaltereinrichtung 17a, den ersten Messwiderstand 15a und die erste (linke) Ankerspule 16 zur Masse 8 fließt. Somit wird ein erstes RL-Glied als Reihenschaltung des Messwiderstandes 15a und der ersten Ankerspule 6a gebildet, das ein spezifisches, vom ohmschen Widerstand und der Induktivität abhängiges Zeitverhalten aufweist; bei festem Messwiderstand 15a, 15b hängt die Zeitkonstante ta, tb somit von der jeweiligen Induktivität La, Lb ab. Die Induktivitäten hängen hierbei von der Ankerstellung ab; in der in Fig. 1 gezeigten rechten Ankerstellung II weist die erste (linke) Ankerspule 6 eine geringe Induktivität La auf als in der ersten Ankerstellung I.

Erfindungsgemäß wird hierbei insbesondere erkannt, dass ein sinnvoller Vergleich nicht durch Messungen in den verschiedenen Ankerstellungen, sondern im vorliegenden Fall auch ohne Betätigung des Ankers durch einen Vergleich der Ankerströme erfolgen kann, die bei offenen LeistungsSchaltern 9a und 9b durch die Mess-Pfade 14a und 14b fließen. Die Messwiderstände 15a und 15b dienen hierbei dem Abgriff einer Messspannungen Ua und Ub, d. h. insbesondere der Entkopplung von der Mess- Spannungsquelle 18.

Die Messströme in den Mess-Pfaden 14a und 14b werden somit entsprechend der Zeitkonstante bzw. Grenzfrequenz ωg(14a) =R15a/La und ωg(14b) =R15b/Lb, wobei die Widerstände R(15a) und R(15b) gleich sind, d.h. R(15a) = R(15b).

Durch einen Vergleich der linken und rechten Seite bei dieser symmetrischen Anordnung ist insbesondere auch eine Messung ohne Verstellung bzw. Aktivierung des Ankers 3 und somit ohne Verstellung der gesamten Magnetventil-Einrichtung 1 möglich.

Die in Figur 1 gezeigte rechte Ankerstellung II ist in den Messungen der Figur 3b und 3d gezeigt, entsprechend zeigen Fig. 3a, c die erste (linke) Ankerstellung I:
Gemäß Figur 3b werden die geschlossenen Mess-Schaltereinrichtungen 17a und 17b nacheinander oder auch gleichzeitig geöffnet. Bei der Messschaltung der Figur 1 mit einem Komparator 20 ist eine gleichzeitige Öffnung der Mess-Schaltereinrichtung 17a und 17b sinnvoll. Somit stellt sich jeweils ein zeitlich nicht konstanter Stromfluss durch beide Mess-Pfade 14a, 14b und die Ankerspulen 6a und 6b ein, mit Mess-Strömen I -14a durch den ersten Mess-Pfad 14a und I -14b durch den zweiten Mess-Pfad 14b, wobei die Mess-Ströme I -14a, I - 14b zu einem Spannungsabfall an den Spulenanschlüssen 16a und 16b führen und somit die Mess-Spannungen Ua und Ub ausgebildet werden.

Nach Öffnen der Mess-Schaltereinrichtung 17a und 17b werden die Mess-Stromkreise unterbrochen, so dass das in den Ankerspulen 6a und 6b aufgebaute Magnetfeld sich abbaut, mit den Zeitkonstanten ta bzw. tb, die von den identischen Messwiderständen R15a=R15b und den Induktivitäten La, Lb abhängen. In der in Figur 1 gezeigten Ankerstellung II ist die Induktivität L der zweiten (rechten) Ankerspule 6b größer als die erste Induktivität La der ersten (linken) Ankerspule 6a, so dass tb ≥ ta. Dies zeigt sich in den Messungen nach Figur 3b und Figur 3d. Gemäß Figur 3b fällt die rechte Messspannung Ub gemäß der festen Linie langsamer als die linke Messspannung Ua, wobei gemäß Figur 3b ermittelt wird, wann die Messspannungen Ua und Ub eine Vergleichsspannung (Referenzspannung) Ur erreichen; entsprechend ist die Zeit ta ≤ die Zeit tb.

Gemäß der hierzu alternativen Messweise nach Figur 3d, die der Messschaltung nach Figur 1 entspricht, werden die Messspannungen Ua und Ub direkt miteinander verglichen, so dass der Komparator 20 ein Zustandssignal Uv oder 0 Volt bzw. eine logische 1 oder 0 bzw. anzeigt in Abhängigkeit davon, welche Messspannung Ua oder Ub größer ist. Hier kann z. B. eine Messung nach einer relevanten Mess-Zeit tm erfolgen, bei der ein hinreichend signifikanter Unterschied zu erwarten ist. Gemäß Fig. 3d liegt in der Ankerstellung II von Fig. 1 der Fall Ub(tm) ≥ Ua(tm) vor, so dass der Komparator 20 somit zur Messzeit tm den Wert S= 0 ausgibt, da Ub an dem Minus-Eingang des Komparators 20 anliegt und größer als Ua ist.

In den hierzu symmetrischen Messungen gemäß Figur 3a und Figur 3c liegt die erste Ankerstellung I vor, wobei in Figur 3a entsprechend Figur 3b gemessen wird, und in Figur 3c entsprechend Figur 3d gemessen wird.

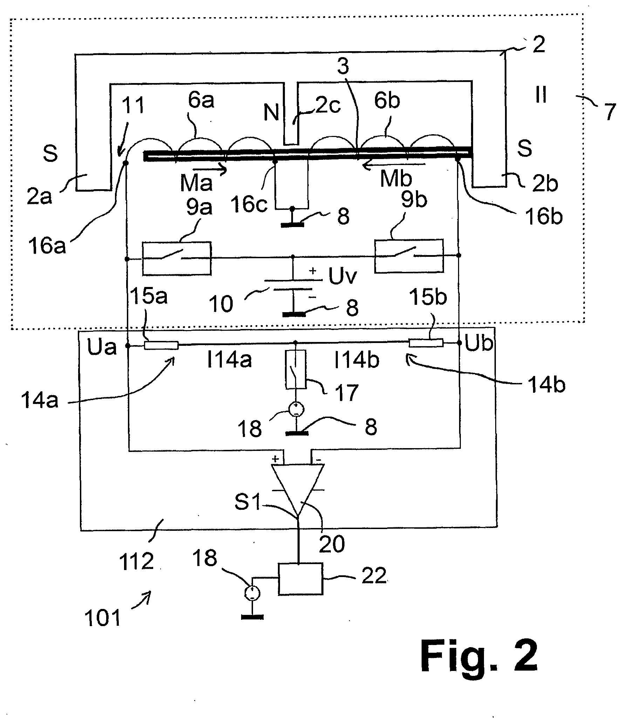

Die Ausführungsform der Figur 2 ist gegenüber Figur 1 dahingehend abgewandelt, dass die beiden Mess-Schaltereinrichtungen 17a und 17b durch eine gemeinsame Mess-Schaltereinrichtung 17 ersetzt ist. Mit der Detektionseinrichtung 12 der Figur 2 lassen sich somit jeweils Messungen vornehmen, bei denen die Mess-Pfade 14a und 14b gleichzeitig geöffnet und geschlossen werden und somit die Messungen gleichzeitig erfolgen, wie mit Figur 3 bereits beschrieben.

Bei Einsatz einer anderen Vergleichseinrichtung statt des Komparators 20 können Messungen auch sukzessive durchgeführt werden, was gemäß Figur 1 mit separaten Mess-Schaltereinrichtungen 17a und 17b möglich ist; hierbei können dann die Messspannungen Ua und Ub sukzessive z. B. über den Messport eine Mikrocontrollers ausgelesen und nachfolgend miteinander verglichen werden. Die Messungen sollten hierbei unmittelbar hintereinander erfolgen, damit nicht sich ändernde Bedingungen wie Temperatur usw. zur Änderung der Messungen führen.

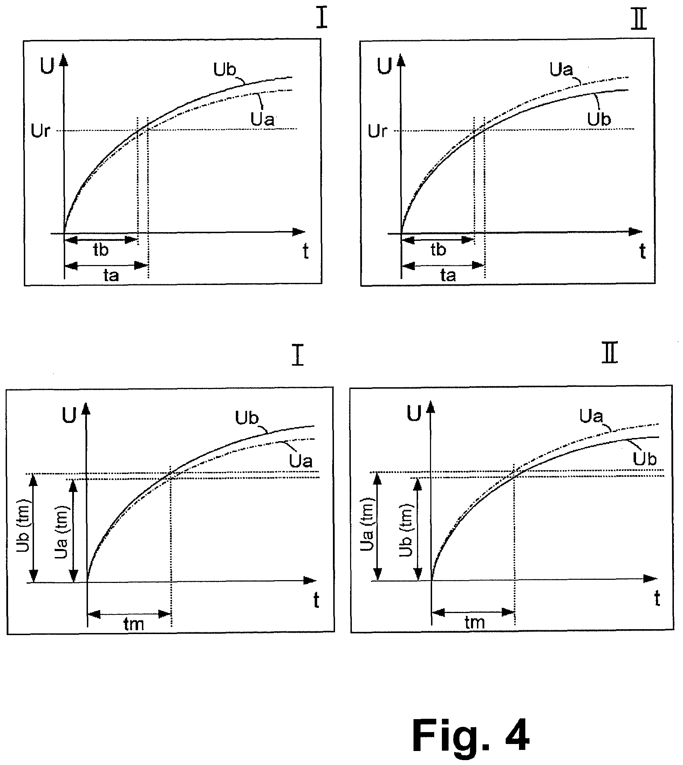

Die Messverfahren nach Figur 3 zeigen Messungen beim Ausschalten der Mess-Ströme, d.h. beim Öffnen der Mess-Schaltereinrichtungen 17a, 17b bzw. 17. Fig. 4 zeigt entsprechende Messungen beim Einschalten des Stromes, d.h. beim Schließen der Mess-Schaltereinrichtungen 17a, 17b bzw. 17 nach Fig. 1 oder Fig. 2. Auch in diesem Fall zeigt der Mess-Pfad der geschlossenen Ankerseite gemäß Figur 1 und 2, somit der zweite bzw. rechte Mess-Pfad 14b, eine größere Zeitkonstante und somit eine langsameres bzw. trägeres Anstiegsverhalten.

Insbesondere können auch beide Messungen nach Fig. 3 und 4 hintereinander durchgeführt werden, so dass zunächst gemäß Figur 1 oder Figur 2 die Mess- Schaltereinrichtungen 17a und 17b bzw. die gemeinsamen Mess-Schaltereinrichtungen 17 geschlossen wird, und der Anstieg des Messstromes bzw. der Spannungen Ua und Ub gemessen wird, und nachfolgend Messungen beim Ausschalten bzw. Öffnen der Schaltereinrichtungen gemäß Figur 3 erfolgen.

Gemäß Figur 1 und Figur 2 wird von der Vergleichseinrichtung 20, d. h. hier somit dem Komparator 20, jeweils ein Zustandssignal S1 ausgegeben, dass die Ankerstellung und somit den Zustand der Magnetventil-Einrichtung ergibt, d. h. dem gezeigten Beispiel mit S=1 in der ersten (linken) Ankerstellung S=0 in der zweiten (rechten) Ankerstellung II.

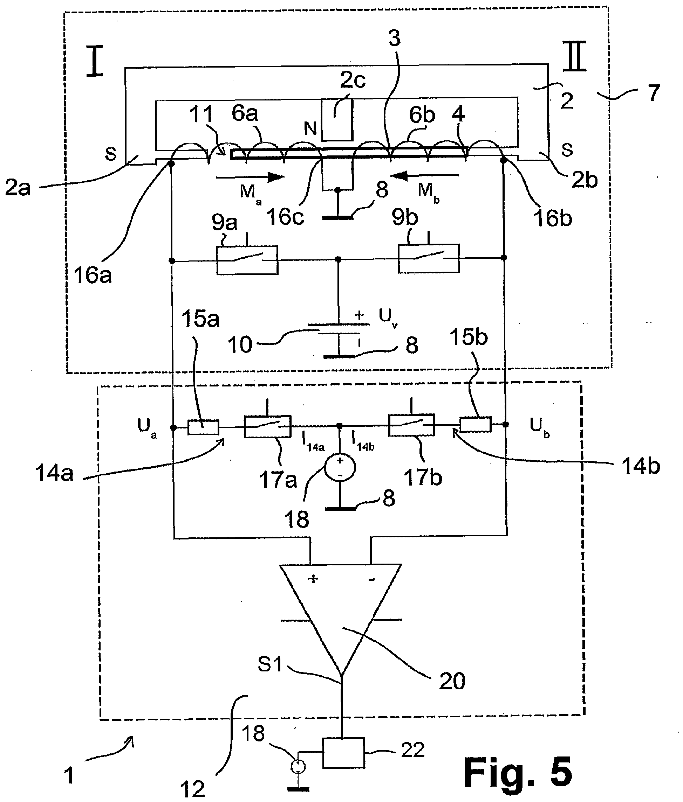

Fig. 5 zeigt eine der Fig. 1 entsprechende Ausbildung, mit sich in axialer Richtung erstreckenden Polansätzen 2a und 2b zur Anlage des Ankers 3.

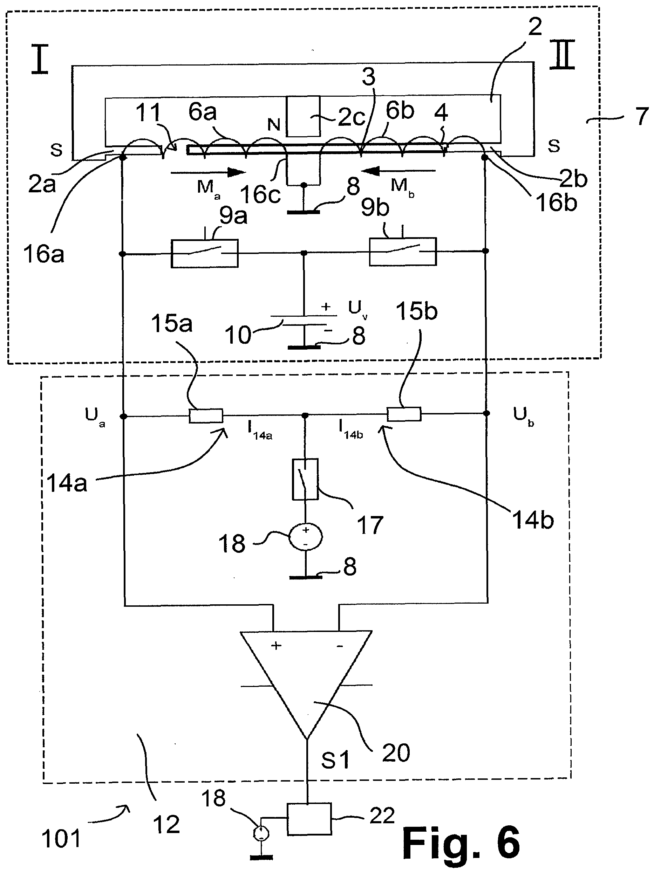

Fig. 6 zeigt eine der Fig. 2 entsprechende Ausführungsform mit explizit eingezeichneten Polansätzen 2a, 2b.

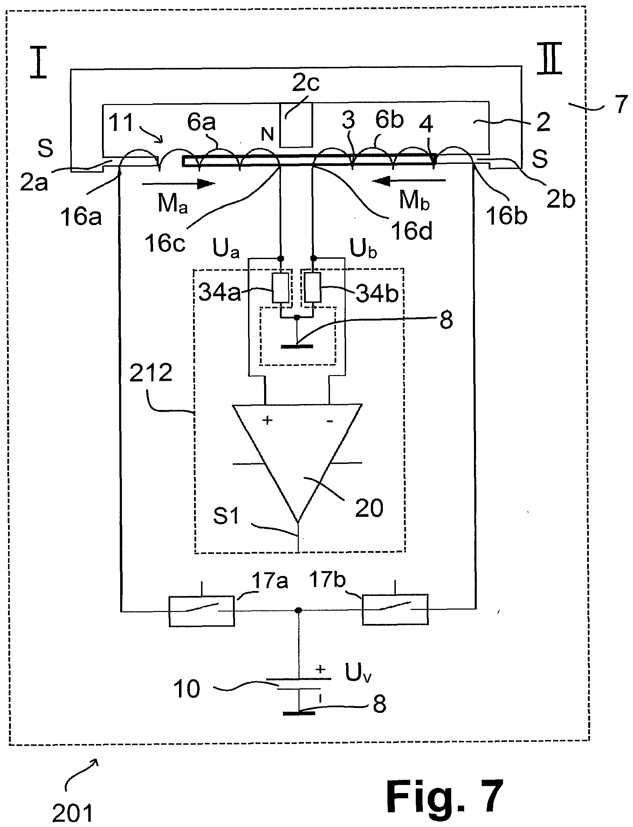

Fig. 7 zeigt eine weitere Ausführungsform einer Magnetventil-Einrichtung 201, bei der die Detektionseinrichtung 212 in den Leistungsstromkreis integriert wird:
Gemäß Fig. 7 sind Shunt-Widerstände 34a, 34b zwischen die beiden Masseanschlüsse 16c der ersten Ankerspule 6a und 16d der zweiten Ankerspule 6b geschaltet. Die Shunt-Widerstände 34a und 34b sind hinreichend klein, so dass der Leistungsverlust im Leistungsstromkreis nicht relevant ist. Somit dienen die Leistungsströme der beiden Ankerspulen 6a und 6b auch als Messströme I_14a und I_14b. Die Messspannungen Ua und Ub werden somit vor den Shunt-Widerständen 34a, 34b, d. h. zwischen den Shunt-Widerständen 34a, 34b und dem jeweiligen Masseanschluss 16c, 16d der Ankerspulen 6a und 6b abgenommen und über den als Vergleichseinrichtung dienenden Komparator 20 ausgewertet, entsprechend den vorbeschriebenen Ausführungsformen.

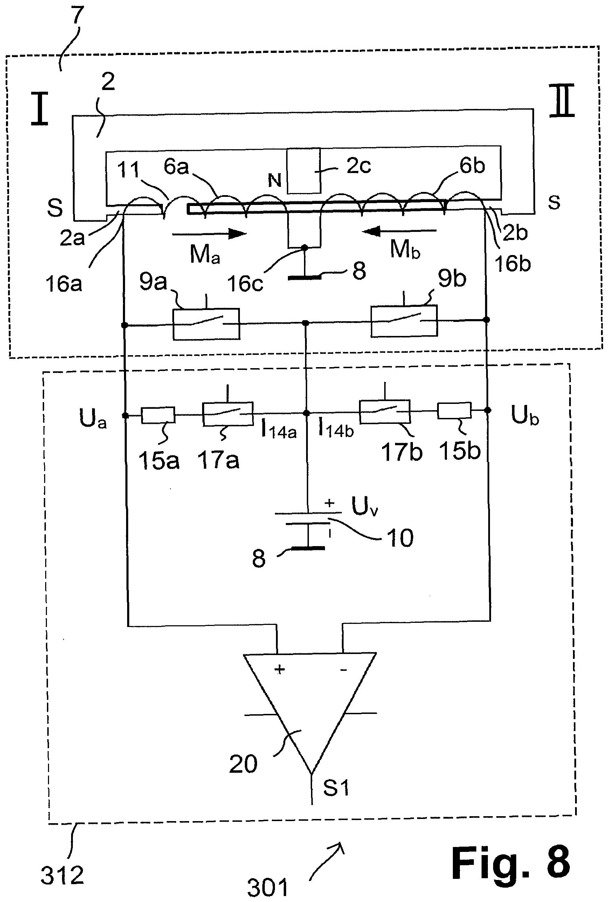

Fig. 8 zeigt eine weitere Ausführungsform einer Magnetventil-Einrichtung 301, bei der die Detektionseinrichtung 312 gegenüber der Ausführungsform der Fig. 1 und Fig. 5 dahingehend abgewandelt ist, dass sie die Versorgungs-Spannungsquelle 10 nutzt; somit ist eine gemeinsame Spannungsquelle, nämlich die Versorgungs-Spannungsquelle 10, sowohl für den Leistungsstromkreis als auch die Detektionseinrichtung 312 vorgesehen. Entsprechend sind gegenüber der Ausführungsform der Fig. 1 und Fig. 5 höhere erste und zweite Messwiderstände 15a, 15b, z. B. im Bereich von einigen kΩ, vorgesehen, um durch die Messströme I-14a und I-14b keinen Schaltvorgang einzuleiten und weiterhin auch den Energieverbrauch bzw. die beim Messen auftretende Verlust-Leistung gering zu halten.

Bei den Ausführungsformen der Fig. 1, 2, 5, 6 können als Mess-Spannungsquelle 18 insbesondere auch bereits in der hier angedeuteten Steuereinrichtung 22, die als Steuer- und Auswerteeinrichtung zum Auswerten und Erkennen der Ankerposition I oder II dient, vorteilhafterweise auch zur Ansteuerung der Leistungs-Schalter 9a und 9b für die Schaltvorgänge (Leistungsschalter), bereits vorhandene Spannungsquellen von z. B. 5 Volt über 3,3 Volt eingesetzt werden. Somit ist zur Ausbildung der Messspannungsquelle 18 kein ergänzender Mehraufwand, bzw. die Ausbildung einer zusätzlichen Spannungsquelle erforderlich.

### Bezugszeichenliste (Bestandteil der Beschreibung)

- 1, 101, 201, 301: Magnetventil-Einrichtung
- 2: Permanentmagnet-Joch
- 2a: erster (linker) Kern /Magnetpol
- 2b: zweiter (rechter) Kern /Magnetpol
- 2c: mittlerer Kern /Magnetpol
- 3: Anker
- 6a: linke (erste) Ankerspule
- 6b: rechte (zweite) Ankerspule
- 7: Magnetventil
- 8: Masse
- 9a: linker (erster) Leistungs-Schalter
- 9b: rechter (zweiter) Leistungs-Schalter
- 10: Versorgungs-Spannungsquelle
- 11: Luftspalt
- 12,112,212,312: Detektionseinrichtung
- 14a: erster (linker) Mess-Pfad
- 14b: zweiter (rechter) Mess-Pfad
- 15a: erster (linker) Messwiderstand
- 15b: zweiter (rechter) Messwiderstand
- 16a: erster (linker) Spulenanschluss
- 16b: zweiter (rechter) Spulenanschluss
- 16c: gemeinsamer dritter Masse-Spulenanschluss
- 17a: erste (linke) Mess-Schaltereinrichtung
- 17b: zweite (rechte) Mess-Schaltereinrichtung
- 17: gemeinsame Mess-Schaltereinrichtung
- 18: Mess-Spannungsquelle
- 20: Vergleichseinrichtung, z. B. Komparator
- 22: Steuereinrichtung
- 24a,b: erster, zweiter Shunt-Widerstand
- 30: Fluidsystem
- 34a, 34b: Shunt-Widerstände

- Uv: Versorgungsspannung
- Ua, Ub: Mess-Spannungen
- I: erste (linke) Ankerstellung
- II: zweite (rechte) Ankerstellung
- Ma: erstes Permanentmagnet-Feld
- Mb: zweites Permanentmagnet-Feld
- I-14a: erster Messstrom
- I-14b: zweiter Messstrom
- I-schalt: Schaltstrom, Leistungs-Schaltstrom
- S1: Zustandssignal (Ankerpositions-Signal)

## Patentansprüche

1. Bistabile Magnetventil-Einrichtung (1, 101, 201, 301) für ein Fluidsystem (30),
wobei die Magnetventil-Einrichtung (1) ein bistabiles Magnetventil (7) aufweist, mit:
einem Permanentmagnet-Joch (2) mit einem ersten Polansatz (2a) und einem zweiten Polansatz (2b), zur Ausbildung eines ersten Eisenkreises und zweiten Eisenkreises,
einem Anker (3) aus magnetisch leitendem Material, der zwischen einer ersten Ankerstellung (I) zur Anlage an dem ersten Kern (2a) unter Ausbildung eines Luftspalts (11) zu dem zweiten Kern (2b) und einer zweiten Ankerstellung (II) zur Anlage an dem zweiten Kern (2b) unter Ausbildung eines Luftspalts (11) zu dem ersten Kern (2a) verstellbar ist,
einer ersten Ankerspule (6a) zur Bestromung für eine Verstellung in die erste Ankerstellung (I), sowie einer zweiten Ankerspule (6b) zur Bestromung für eine Verstellung in die zweite Ankerstellung (II),
einer Endstufe (9a, 9b, 10) zur Bestromung jeweils einer der Ankerspulen (6a, 6b) für eine Verstellung des Ankers (3),
**dadurch gekennzeichnet, dass**
die Magnetventil-Einrichtung (1) weiterhin aufweist eine Detektionseinrichtung (12, 112, 212, 312) zur Bewertung oder Messung einer ersten Induktivität (La, Lb) der ersten Ankerspule (6a) und zur Bewertung oder Messung einer zweiten Induktivität (La, Lb) der zweiten Ankerspule (6b) ohne Verstellung des Ankers (3) und zum Vergleich der Induktivitäten (La, Lb) der ersten Ankerspule (6a) und der zweiten Ankerspule (6b) und zur Ausgabe eines die Ankerstellung (I, II) anzeigenden Zustandssignals (S1).

2. Magnetventil-Einrichtung (1, 101, 201, 301) nach Anspruch 1, **dadurch gekennzeichnet, dass** die Detektionseinrichtung (12, 112, 212, 312) aufweist:
einen an eine Mess-Spannungsquelle (18) angeschlossenen ersten Messpfad (14a) zur Bestromung der ersten Ankerspule (6a) zur Messung oder Bewertung der ersten Induktivität (La),
einen an die Mess-Spannungsquelle (18) angeschlossenen zweiten Messpfad (14b) zur Bestromung der zweiten Ankerspule (6b) zur Messung oder Bewertung der zweiten Induktivität (Lb), und
eine an die Messpfade (14a, 14b) angeschlossenen Vergleichseinrichtung (20).

3. Magnetventil-Einrichtung (1, 101) nach Anspruch 2, **dadurch gekennzeichnet, dass** der Anker (3) durch Bestromen der Ankerspulen (6a, 6b) über eine Versorgungs-Spannungsquelle (10) verstellbar ist und die Mess- Spannungsquelle (18) von der Versorgungs-Spannungsquelle (10) verschieden ist, vorzugsweise mit kleinerer Mess-Spannung als die Versorgungsspannung der Versorgungs-Spannungsquelle (10).

4. Magnetventil-Einrichtung (1, 101) nach Anspruch 3, **dadurch gekennzeichnet, dass** sie eine Steuereinrichtung (22) zur Aufnahme des Zustandssignals (S1).und/oder zur Ansteuerung einer Leistungs- Schalteinrichtung (9a, 9b) und/oder zur Ansteuerung einer Mess- Schaltereinrichtung (17a, 17b, 17) aufweist, und
die Mess- Spannungsquelle (18) auch zur Spannungsversorgung der Steuereinrichtung (22) vorgesehen ist.

5. Magnetventil-Einrichtung (1, 101) nach einem der Ansprüche 2 bis 4, **dadurch gekennzeichnet, dass**
der erste Messpfad (14a) einen ersten Messwiderstand (15a) aufweist zur Ausbildung einer Reihenschaltung der ersten Ankerspule (6a) mit dem ersten Messwiderstand (15a) an der Mess-Spannungsquelle (18) als eine erste Spannungsteiler-Schaltung, und
der zweite Messpfad (14b) einen zweiten Messwiderstand (15b) aufweist zur Ausbildung einer Reihenschaltung der zweiten Ankerspule (6b) mit dem zweiten Messwiderstand (15b) an der Mess-Spannungsquelle (18) als eine zweite Spannungsteiler-Schaltung,
wobei der erste und zweite Messwiderstand (15a, 15b) gleich groß sind, wobei die Vergleichseinrichtung (20) einen Betrag und/oder ein zeitliches Verhalten einer ersten Messspannung (Ua) zwischen dem ersten Messwiderstand (15a) und der ersten Ankerspule (6a) und einer zweiten Messspannung (Ub) zwischen dem zweiten Messwiderstand (15b) und der zweiten Ankerspule (6b) vergleicht.

6. Magnetventil-Einrichtung (1, 101) nach einem der Ansprüche 2 bis 5,
**dadurch gekennzeichnet, dass** mindestens eine Mess- Schalteinrichtung (17a, 17b, 17) vorgesehen ist, zum Schließen der Mess-Stromkreise über die Mess-Pfade (14a, 14b) und die Ankerspulen (6a, 6b),
wobei die Mess-Schalteinrichtung (17a, 17b, 17) von einer Leistungs-Schalteinrichtung (9a, 9b) zum Bestromen der Ankerspulen (6a, 6b) für die Verstellungen des Ankers (3) verschieden ist.

7. Magnetventil-Einrichtung (1) nach Anspruch 6, **dadurch gekennzeichnet, dass** in dem ersten Messpfad (14a) und dem zweiten Messpfad (14b) separate Mess-Schalteinrichtungen (17a, 17b) zum gleichzeitigen oder sukzessiven Bestromen der Messpfade (14a, 14b) vorgesehen sind.

8. Magnetventil-Einrichtung (101) nach Anspruch 6, **dadurch gekennzeichnet, dass** eine gemeinsame Mess- Schalteinrichtung (17) für die beiden Messpfade (14a, 14b) vorgesehen ist.

9. Magnetventil-Einrichtung (301) nach einem der Ansprüche 2 oder 5 bis 7, **dadurch gekennzeichnet, dass**
der Anker (3) durch Bestromung der Ankerspulen (6a, 6b) über eine Versorgungs-Spannungsquelle (10) und Leistungs-Schalter (17a, 17b) verstellbar ist,
wobei die Messpfade (14a, 14b) mit jeweils einem Mess- Schalter (17a, 17b) und einem Messwiderstand (15a, 15b) parallel zu den LeistungsSchaltern (9a, 9b) an die Versorgungs-Spannungsquelle (10) angeschlossen sind, und
die Vergleichseinrichtung (20) die an den Messwiderständen (15a, 15b) abfallenden Messspannungen (Ua, Ub) aufnimmt und miteinander vergleicht.

10. Magnetventil-Einrichtung (201) nach einem der Ansprüche 1 bis 9,
**dadurch gekennzeichnet, dass**
der Anker (3) durch Bestromung der Ankerspulen (6a, 6b) über eine Versorgungs-Spannungsquelle (10) und Leistungs-Schalter (17a, 17b) verstellbar ist,
die Detektionseinrichtung (212) einen ersten und einen zweiten Shunt-Widerstand (34a, 34b) und eine Vergleichseinrichtung (20) aufweist, wobei jeweils ein Shunt-Widerstand (34a, 34b) mit einer Ankerspule (6a, 6b) und einem Leistungs-Schalter (17a, 17b) in Reihe an die Versorgungsspannungsquelle (10) geschaltet ist, und
die Vergleichseinrichtung (20) die an den Shunt-Widerständen (34a, 34b) abfallenden Mess-Spannungen (Ua, Ub), insbesondere gegenüber Masse (8), aufnimmt und miteinander vergleicht.

11. Magnetventil-Einrichtung (1, 101, 201, 301) nach einem der Ansprüche 4 bis 10, **dadurch gekennzeichnet, dass** die Vergleichseinrichtung (20) den Betrag der beiden Messspannungen (Ua, Ub) nach jeweils einer vorgegebenen Messzeit (tm) bei einem Einschaltvorgang und/oder Ausschaltvorgang vergleicht und das Zustandssignal (S1) in Abhängigkeit einer Differenz der beiden Messspannungen (Ua, Ub) ausgibt, z. B. als Operationsverstärker (20) oder Mikrocontroller.

12. Magnetventil-Einrichtung (1, 101, 201, 301) nach einem der Ansprüche 4 bis 11, **dadurch gekennzeichnet, dass** die Vergleichseinrichtung (20) eine Zeitdauer (ta, Tb) der beiden Messspannungen (Ua, Ub) bis zum Erreichen einer Referenzspannung (Ur) bei einem Einschaltvorgang und/oder Ausschaltvorgang vergleicht.

13. Magnetventil-Einrichtung (1, 101, 201, 301) nach einem der Ansprüche 4 bis 12, **dadurch gekennzeichnet, dass** die Vergleichseinrichtung (20) zur gleichzeitigen Aufnahme der beiden Messspannungen (Ua, Ub) ausgebildet ist, z. B. als Operationsverstärker, oder zur sukzessiven Aufnahme der beiden Messspannungen (Ua, Ub), z. B. als Mikrocontroller, ausgebildet ist.

14. Magnetventil-Einrichtung (1, 101, 201, 301) nach einem der vorherigen Ansprüche, **dadurch gekennzeichnet, dass** sie symmetrisch in den magnetischen und elektrischen Eigenschaften der Permanentmagnet-Einrichtung (2), des Ankers (3) mit seinen Ankerspulen (6a, 6b) und der Messpfade (14a, 14b) ausgebildet ist.

15. Elektropneumatische Parkbremse, die eine Magnetventil-Einrichtung (1, 101) nach einem der vorherigen Ansprüche aufweist, wobei eine Ankerstellung (I, II) einer gelösten Parkbremse und die andere Ankerstellung (II, I) einer eingelegten Parkbremse entspricht.

16. Verfahren zum Ermitteln einer Ankerstellung (I, II) eines in einem Fluidsystem (30) vorgesehenen bistabilen Magnetventils (7), das eine Permanentmagnet-Einrichtung (2) mit einem ersten Kern (2a), einem zweiten Kern (2b), einem zwischen einer ersten Ankerstellung (I) zur Anlage an dem ersten Kern (2a) und einer zweiten Ankerstellung (II) zur Anlage an dem zweiten Kern (2b) verstellbaren Anker (3) und zwei Ankerspulen (6a, 6b) zur Verstellung des Ankers (3) zwischen den Ankerstellungen (I, II) aufweist,
wobei in einem Messvorgang ohne Verstellung des Ankers (3) ein erster Messstrom (I-14a) von einer Mess-Spannungsquelle (18) über einen ersten Messpfad (14a) und eine erste Ankerspule (6a) geleitet wird, wodurch eine von der ersten Induktivität (La) der ersten Ankerspule (6a) abhängige erste Mess-Spannung (Ua) gebildet wird, und ein zweiter Messstrom (I-14b) von der Mess-Spannungsquelle (18) über einen zweiten Messpfad (14b) und eine zweite Ankerspule (6a) geleitet wird, wodurch eine von der zweiten Induktivität (Lb) der zweiten Ankerspule (6b) abhängige zweite Mess-Spannung (Ub) gebildet wird, und
eine Höhe und/oder ein zeitliches Verhalten der ersten Messspannung (Ua) und der zweiten Messspannung (Ub) miteinander verglichen wird und in Abhängigkeit des Vergleichs ein Zustandssignal (S1) ausgegeben wird.

17. Verfahren nach Anspruch 16, **dadurch gekennzeichnet, dass** die Mess-Spannungen (Ua, Ub) gleichzeitig erzeugt und nach einer vorgegeben Zeitdauer, insbesondere bei einem Einschaltvorgang und/oder Ausschaltvorgang, von einer Vergleichseinrichtung (20) miteinander verglichen werden, z. B. durch Differenzbildung.

18. Verfahren nach Anspruch 17, **dadurch gekennzeichnet, dass** Zeitdauern der Mess-Spannungen (Ua, Ub) bis zum Erreichen eines vorgegebenen Spannungswertes miteinander verglichen werden.

## Claims

1. Bistable solenoid valve device (1, 101, 201, 301) for a fluid system (30),
wherein the solenoid valve device (1) has a bistable solenoid valve (7) having:
a permanent magnet yoke (2) with a first pole base (2a) and a second pole base (2b) for the formation of a first ferromagnetic circuit and a second ferromagnetic circuit,
an armature (3) consisting of a magnetically conductive material, which can be displaced between a first armature position (I) for contact against the first core (2a) to form an air gap (11) with the second core (2b), and a second armature position (II) for contact against the second core (2b) to form an air gap (11) with the first core (2a),
a first armature coil (6a) to be fed a current for a displacement into the first armature position (I), and a second armature coil (6b) to be fed a current for a displacement into the second armature position (II),
a final stage (9a, 9b, 10) for feeding current to in each case one of the armature coils (6a, 6b) for a displacement of the armature (3),
**characterized in that**
the solenoid valve device (1) further comprises a detection device (12, 112, 212, 312) for evaluating or measuring a first inductance (La, Lb) of the first armature coil (6a) and for evaluating or measuring a second inductance (La, Lb) of the second armature coil (6b) without displacement of the armature (3) and for comparing the inductances (La, Lb) of the first armature coil (6a) and of the second armature coil (6b) and for outputting a state signal (S1) that indicates the armature position (I, II).

2. Solenoid valve device (1, 101, 201, 301) according to Claim 1, **characterized in that** the detection device (12, 112, 212, 312) comprises:
a first measurement path (14a) that is connected to a measuring voltage source (18) for energizing the first armature coil (6a) for the measurement or evaluation of the first inductance (La),
a second measurement path (14b) that is connected to the measuring voltage source (18) for energizing the second armature coil (6b) for the measurement or evaluation of the second inductance (Lb), and
a comparison device (20) linked to the measurement paths (14a, 14b).

3. Solenoid valve device (1, 101) according to Claim 2, **characterized in that** the armature (3) can be displaced by the energization of the armature coils (6a, 6b) by means of a supply voltage source (10), and the measuring voltage source (18) is different from the supply voltage source (10), preferably with lower measuring voltage than the supply voltage from the supply voltage source (10).

4. Solenoid valve device (1, 101) according to Claim 3, **characterized in that** it has a control system (22) for receiving the status signal (S1) and/or for activating a power switch device (9a, 9b) and/or for activating a measuring switch device (17a, 17b, 17), and
the measuring voltage source (18) is also provided to supply voltage to the control system (22).

5. Solenoid valve device (1, 101) according to one of Claims 2 to 4, **characterized in that**
the first measurement path (14a) has a first measuring resistor (15a) for creating a series connection of the first armature coil (6a) with the first measuring resistor (15a) to the measuring voltage source (18) as a first voltage divider circuit, and
the second measurement path (14b) has a second measuring resistor (15b) for creating a series connection of the second armature coil (6b) with the second measuring resistor (15b) to the measuring voltage source (18) as a second voltage divider circuit,
wherein the first and second measuring resistors (15a, 15b) are of same resistance,
wherein the comparison device (20) compares a magnitude and/or a temporal behaviour of a first measuring voltage (Ua) between the first measuring resistor (15a) and the first armature coil (6a) and a second measuring voltage (Ub) between the second measuring resistor (15b) and the second armature coil (6b) .

6. Solenoid valve device (1, 101) according to one of Claims 2 to 5, **characterized in that** at least one measuring switch device (17a, 17b, 17) is provided for closing the measuring circuits via the measurement paths (14a, 14b) and the armature coils (6a, 6b),
wherein the measuring switch device (17a, 17b, 17) is different from a power switch device (9a, 9b) for energizing the armature coils (6a, 6b) for the displacements of the armature (3).

7. Solenoid valve device (1) according to Claim 6, **characterized in that** separate measuring switch devices (17a, 17b) are provided in the first measurement path (14a) and the second measurement path (14b) for the simultaneous or successive energization of the measurement paths (14a, 14b).

8. Solenoid valve device (101) according to Claim 6, **characterized in that** a common measuring switch device (17) is provided for the two measurement paths (14a, 14b).

9. Solenoid valve device (301) according to one of Claims 2 or 5 to 7, **characterized in that** the armature (3) can be displaced by energization of the armature coils (6a, 6b) by means of a supply voltage source (10) and power switches (9a, 9b), wherein each of the measurement paths (14a, 14b) is connected to the supply voltage source (10) by a measuring switch (17a, 17b) and a measuring resistor (15a, 15b) parallel to the power switches (9a, 9b), and
the comparison device (20) receives the measuring voltages (Ua, Ub) across the measuring resistors (15a, 15b) and compares them.

10. Solenoid valve device (201) according to one of Claims 1 to 9, **characterized in that**
the armature (3) can be displaced by the energization of the armature coils (6a, 6b) by means of a supply voltage source (10) and power switches (9a, 9b),
the detection device (212) has a first and a second shunt resistor (34a, 34b) and a comparison device (20),
wherein in each case a shunt resistor (34a, 34b) is connected in series with an armature coil (6a, 6b) and a power switch (9a, 9b) to the supply voltage source (10), and
the comparison device (20) receives the measuring voltages (Ua, Ub) across the shunt resistors (34a, 34b), especially relative to ground (8), and compares them.

11. Solenoid valve device (1, 101, 201, 301) according to one of Claims 4 to 10, **characterized in that** the comparison device (20) compares the magnitude of the two measuring voltages (Ua, Ub) after a predetermined measurement time (tm) in each case during a start-up process and/or shut-down process, and generates the status signal (S1) as a function of a difference between the two measuring voltages (Ua, Ub), e.g. as an operational amplifier (20) or microcontroller.

12. Solenoid valve device (1, 101, 201, 301) according to one of Claims 4 to 11, **characterized in that** the comparison device (20) compares a duration (ta, Tb) of the two measuring voltages (Ua, Ub) until a reference voltage (Ur) is reached during a start-up process and/or shut-down process.

13. Solenoid valve device (1, 101, 201, 301) according to one of Claims 4 to 12, **characterized in that** the comparison device (20) is configured for simultaneously receiving the two measuring voltages (Ua, Ub), e.g. as an operational amplifier, or is configured for receiving the two measuring voltages (Ua, Ub) successively, e.g. as a microcontroller.

14. Solenoid valve device (1, 101, 201, 301) according to one of the preceding claims, **characterized in that** it is configured symmetrically with regard to the magnetic and electrical properties of the permanent magnet device (2), of the armature (3) with its armature coils (6a, 6b) and the measurement paths (14a, 14b).

15. Electro-pneumatic parking brake having a solenoid valve device (1, 101) according to one of the preceding claims, wherein one armature position (I, II) corresponds to a released parking brake, and the other armature position (II, I) corresponds to an engaged parking brake.

16. Method for detecting an armature position (I, II) of a bistable solenoid valve (7) that is provided in a fluid system (30) and that comprises a permanent magnet device (2) with a first core (2a), a second core (2b), an armature (3), which can be displaced between a first armature position (I) for contact against the first core (2a) and a second armature position (II) for contact against the second core (2b), and two armature coils (6a, 6b) for displacing the armature (3) between the armature positions (I, II),
wherein a first measuring current (I-14a) from a measuring voltage source (18) is conducted via a first measurement path (14a) and a first armature coil (6a) in a measuring operation without displacement of the
armature (3),
whereby a first measuring voltage (Ua), which is dependent upon the first inductance (La) of the first armature coil (6a), is formed, and a second measuring current (I-14b) from the measuring voltage source (18) is conducted via a second measurement path (14b) and a second armature coil (6b),
whereby a second measuring voltage (Ub), which is dependent upon the second inductance (Lb) of the second armature coil (6b), is formed, and
a level and/or a temporal behaviour of the first measuring voltage (Ua) and the second measuring voltage (Ub) are compared to each other, and a status signal (S1) is generated as a function of the comparison.

17. Method according to Claim 16, **characterized in that** the measuring voltages (Ua, Ub) are generated at the same time and are compared to each other by a comparison device (20), e.g. by subtraction, after a predetermined duration, in particular during a start-up process and/or a shutdown process.

18. Method according to Claim 17, **characterized in that** durations of the measuring voltages (Ua, Ub) until a predetermined voltage level is reached are compared to each other.

## Revendications

1. Dispositif d'électrovanne (1, 101, 201, 301) bistable pour un système de fluide (30),
le dispositif d'électrovanne (1) possédant une électrovanne bistable (7) comprenant :
une culasse à aimant permanent (2) ayant un premier talon polaire (2a) et un deuxième talon polaire (2b) destinés à former un premier circuit ferromagnétique et un deuxième circuit ferromagnétique,
un induit (3) en matériau magnétiquement conducteur, qui peut être positionné entre une première position d'induit (I) en vue de reposer contre le premier noyau (2a) en formant un entrefer (11) par rapport au deuxième noyau (2b) et une deuxième position d'induit (II) en vue de reposer contre le deuxième noyau (2b) en formant un entrefer (11) par rapport au premier noyau (2a),
une première bobine d'induit (6a) destinée à être alimentée électriquement pour un positionnement dans la première position d'induit (I) ainsi qu'une deuxième bobine d'induit (6b) destinée à être alimentée électriquement pour un positionnement dans la deuxième position d'induit (II),
un étage final (9a, 9b, 10) destiné à alimenter électriquement respectivement l'une des bobines d'induit (6a, 6b) pour un positionnement de l'induit (3),
**caractérisé en ce que**
le dispositif d'électrovanne (1) possède en outre un dispositif de détection (12, 112, 212, 312) destiné à évaluer ou à mesurer une première inductance (La, Lb) de la première bobine d'induit (6a) et à évaluer ou à mesurer une deuxième inductance (La, Lb) de la deuxième bobine d'induit (6b) sans positionnement de l'induit (3) et à comparer les inductances (La, Lb) de la première bobine d'induit (6a) et de la deuxième bobine d'induit (6b) et à délivrer un signal d'état (S1) qui indique la position d'induit (I, II).

2. Dispositif d'électrovanne (1, 101, 201, 301) selon la revendication 1, **caractérisé en ce que** le dispositif de détection (12, 112, 212, 312) possède :
un premier trajet de mesure (14a) raccordé à une source de tension de mesure (18) servant à alimenter électriquement la première bobine d'induit (6a) en vue d'évaluer ou de mesurer la première inductance (La),
un deuxième trajet de mesure (14b) raccordé à la source de tension de mesure (18) servant à alimenter électriquement la deuxième bobine d'induit (6b) en vue d'évaluer ou de mesurer la deuxième inductance (Lb),
un dispositif comparateur (20) raccordé aux trajets de mesure (14a, 14b).

3. Dispositif d'électrovanne (1, 101) selon la revendication 2, **caractérisé en ce que** l'induit (3) peut être positionné par l'alimentation électrique des bobines d'induit (6a, 6b) par le biais d'une source de tension d'alimentation (10) et la source de tension de mesure (18) est différente de la source de tension d'alimentation (10), de préférence avec une tension de mesure plus petite que la tension d'alimentation de la source de tension d'alimentation (10).

4. Dispositif d'électrovanne (1, 101) selon la revendication 3, **caractérisé en ce qu'**il possède un dispositif de commande (22) destiné à recevoir le signal d'état (S1) et/ou à commander un dispositif de commutation de puissance (9a, 9b) et/ou à commander un dispositif de commutation de mesure (17a, 17b, 17), et la source de tension de mesure (18) est également conçue pour l'alimentation électrique du dispositif de commande (22).

5. Dispositif d'électrovanne (1, 101) selon l'une des revendications 2 à 4, **caractérisé en ce que** le premier trajet de mesure (14a) possède une première résistance de mesure (15a) destinée à former un circuit série de la première bobine d'induit (6a) avec la première résistance de mesure (15a) à la source de tension de mesure (18) en tant que premier circuit diviseur de tension, et
le deuxième trajet de mesure (14b) possède une deuxième résistance de mesure (15b) destinée à former un circuit série de la deuxième bobine d'induit (6b) avec la deuxième résistance de mesure (15b) à la source de tension de mesure (18) en tant que deuxième circuit diviseur de tension,
la première et la deuxième résistance de mesure (15a, 15b) étant de la même valeur,
le dispositif comparateur (20) comparant une amplitude et/ou un comportement dans le temps d'une première tension de mesure (Ua) entre la première résistance de mesure (15a) et la première bobine d'induit (6a) et d'une deuxième tension de mesure (Ub) entre la deuxième résistance de mesure (15b) et la deuxième bobine d'induit (6b).

6. Dispositif d'électrovanne (1, 101) selon l'une des revendications 2 à 5, **caractérisé en ce qu'**au moins un dispositif de commutation de mesure (17a, 17b, 17) est présent, servant à fermer les circuits de courant de mesure par le biais des trajets de mesure (14a, 14b) et des bobines d'induit (6a, 6b), le dispositif de commutation de mesure (17a, 17b, 17) étant différent d'un dispositif de commutation de puissance (9a, 9b) destiné à alimenter électriquement les bobines d'induit (6a, 6b) pour le positionnement de l'induit (3).

7. Dispositif d'électrovanne (1) selon la revendication 6, **caractérisé en ce que** des dispositifs de commutation de mesure (17a, 17b) séparés destinés à alimenter électriquement simultanément ou successivement les trajets de mesure (14a, 14b) se trouvent dans le premier trajet de mesure (14a) et le deuxième trajet de mesure (14b).

8. Dispositif d'électrovanne (101) selon la revendication 6, **caractérisé en ce qu'**un dispositif de commutation de mesure (17) commun est présent pour les deux trajets de mesure (14a, 14b).

9. Dispositif d'électrovanne (301) selon l'une des revendications 2 ou 5 à 7, **caractérisé en ce que** l'induit (3) peut être positionné par l'alimentation électrique des bobines d'induit (6a, 6b) par le biais d'une source de tension d'alimentation (10) et de commutateurs de puissance (17a, 17b),
les trajets de mesure (14a, 14b) étant raccordés à la source de tension d'alimentation (10) respectivement par un commutateur de mesure (17a, 17b) et une résistance de mesure (15a, 15b) en parallèle avec les commutateurs de puissance (9a, 9b), et
le dispositif comparateur (20) relevant et comparant entre elles les tensions de mesure (Ua, Ub) qui chutent aux bornes des résistances de mesure (15a, 15b).

10. Dispositif d'électrovanne (201) selon l'une des revendications 1 à 9, **caractérisé en ce que** l'induit (3) peut être positionné par l'alimentation électrique des bobines d'induit (6a, 6b) par le biais d'une source de tension d'alimentation (10) et de commutateurs de puissance (17a, 17b),
le dispositif de détection (212) possède une première et une deuxième résistance shunt (34a, 34b) et un dispositif comparateur (20),
une résistance shunt (34a, 34b) étant respectivement branchée en série avec une bobine d'induit (6a, 6b) et un commutateur de puissance (17a, 17b) à la source de tension d'alimentation (10), et
le dispositif comparateur (20) relevant et comparant entre elles les tensions de mesure (Ua, Ub) qui chutent aux bornes des résistances shunt (34a, 34b), notamment par rapport à la masse (8).

11. Dispositif d'électrovanne (1, 101, 201, 301) selon l'une des revendications 4 à 10, **caractérisé en ce que** le dispositif comparateur (20) compare l'amplitude des deux tensions de mesure (Ua, Ub) respectivement après un temps de mesure (tm) prédéfini lors d'une opération de mise en circuit et/ou de mise hors circuit et délivre le signal d'état (S1) en fonction d'une différence entre les deux tensions de mesure (Ua, Ub), par exemple en tant qu'amplificateur opérationnel (20) ou microcontrôleur.

12. Dispositif d'électrovanne (1, 101, 201, 301) selon l'une des revendications 4 à 11, **caractérisé en ce que** le dispositif comparateur (20) compare une durée (ta, Tb) des deux tensions de mesure (Ua, Ub) jusqu'à atteindre une tension de référence (Ur) lors d'une opération de mise en circuit et/ou de mise hors circuit.

13. Dispositif d'électrovanne (1, 101, 201, 301) selon l'une des revendications 4 à 12, **caractérisé en ce que** le dispositif comparateur (20) est configuré pour relever simultanément les deux tensions de mesure (Ua, Ub), par exemple en tant qu'amplificateur opérationnel, ou pour relever successivement les deux tensions de mesure (Ua, Ub), par exemple en tant que microcontrôleur.

14. Dispositif d'électrovanne (1, 101, 201, 301) selon l'une des revendications précédentes, **caractérisé en ce qu'**il est configuré de manière symétrique dans les propriétés magnétiques et électriques du dispositif à aimant permanent (2), de l'induit (3) avec ses bobines d'induit (6a, 6b) et des trajets de mesure (14a, 14b).

15. Frein de stationnement électropneumatique, qui possède un dispositif d'électrovanne (1, 101) selon l'une des revendications précédentes, une position d'induit (I, II) correspondant à un frein de stationnement desserré et l'autre position d'induit (II, I) à un frein de stationnement serré.

16. Procédé pour déterminer une position d'induit (I, II) d'une électrovanne bistable (7) présente dans un système de fluide (30), laquelle possède un dispositif à aimant permanent (2) ayant un premier noyau (2a) et un deuxième noyau (2b), un induit (3) qui peut être positionné entre une première position d'induit (I) en vue de reposer contre le premier noyau (2a), une deuxième position d'induit (II) en vue de reposer contre le deuxième noyau (2b) et deux bobines d'induit (6a, 6b) destinées au positionnement de l'induit (3) entre les positions d'induit (I, II),
dans une opération de mesure sans positionnement de l'induit (3), un premier courant de mesure (I-14a) étant conduit d'une source de tension de mesure (18) par le biais d'un premier trajet de mesure (14a) et d'une première bobine d'induit (6a),
moyennant quoi une première tension de mesure (Ua) dépendant de la première inductance (La) de la première bobine d'induit (6a) est formée, et un deuxième courant de mesure (I-14b) étant conduit de la source de tension de mesure (18) par le biais d'un deuxième trajet de mesure (14b) et d'une deuxième bobine d'induit (6a), moyennant quoi une deuxième tension de mesure (Ub) dépendant de la deuxième inductance (Lb) de la deuxième bobine d'induit (6b) est formée, et
une amplitude et/ou un comportement dans le temps de la première tension de mesure (Ua) et de la deuxième tension de mesure (Ub) étant comparés entre eux et un signal d'état (S1) étant délivré en fonction de la comparaison.

17. Procédé selon la revendication 16, **caractérisé en ce que** les tensions de mesure (Ua, Ub) sont générées simultanément et sont comparées entre elles par un dispositif comparateur (20) après une durée prédéfinie, notamment lors d'une opération de mise en circuit et/ou de mise hors circuit, par exemple par calcul de la différence.

18. Procédé selon la revendication 17, **caractérisé en ce que** les durées des tensions de mesure (Ua, Ub) jusqu'à atteindre une valeur de tension prédéfinie sont comparées entre elles.
